# EUROPÄISCHE PATENTSCHRIFT

(11) **EP 1 124 001 B1**
(45) Veröffentlichungstag und Bekanntmachung des Hinweises auf die Patenterteilung: **13.04.2005**
(21) Anmeldenummer: 01101562.5
(22) Anmeldetag: 25.01.2001
(51) Int. Cl.: D21B 1/32, D21F 1/70, B03D 1/14

(54) **Verfahren und Vorrichtung zur Belüftung von Dispersionen**
Method and device for aerating dispersions
Procédé et dispositif pour l'aération de dispersions

(30) Priorität: 03.02.2000 AT 169002000
(43) Veröffentlichungstag der Anmeldung: 16.08.2001
(73) Patentinhaber: Andritz AG, 8045 Graz (AT)
(72) Erfinder: Gabl, Helmuth, Dipl.Ing.Dr., 8046 Graz (AT); Hertl, Erwin, Ing., 8111 Judendorf (AT); Scherzinger, Bernhard, Dipl.Ing.Dr., 1030 Wien (AT)
(74) Vertreter: Schweinzer, Friedrich

(56) Entgegenhaltungen:
- EP-A- 0 035 243
- EP-A- 0 391 042
- DE-A- 4 116 916
- US-A- 4 743 379

## Beschreibung

Die Erfindung betrifft ein Verfahren zur Belüftung von Dispersionen zur Flotation beim Deinken von Faserstoffsuspensionen, bei dem mindestens zwei Stufen vorgesehen sind. Weiters betrifft die Erfindung eine Vorrichtung zur Durchführung des Verfahrens.

Die Deinking-Flotation ist ein mechanisches Verfahren zur Abtrennung von Störstoffen und Druckfarbenpartikel aus insbesondere in der Altpapieraufbereitung hergestellten Faserstoffsuspensionen. Dabei werden in einer geeigneten Flotationszelle hydrophobe Feststoffe wie Druckfarbenpartikel oder Stickies mit Gasblasen in Kontakt gebracht. Die anhaftenden Feststoffe werden mit den Gasblasen an die Flüssigkeitsoberfläche getragen und können dort als Schaum entfernt werden. Der Faserstoff wird aufgrund seines hydrophilen Charakters mit dem Gutstoff ausgetragen. Zur Erzeugung der Gasblasen hat sich u.a. der Einsatz von selbstansaugenden Injektoren bewährt. Da der Prozeß der selektiven Entfernung von Druckfarben aus Faserstoffsuspensionen nur mit geringem Wirkungsgrad vor sich geht, werden meist mehrstufige Verfahren, wie sie z.B. aus der DE 41 16 916 C2 bekannt sind, eingesetzt. Dabei wird die gesamte Faserstoffsuspension durch Injektoren geleitet, um eine genügend große Blasenoberfläche für eine erfolgreiche Flotation zu schaffen. Der Gutstoff jeder Stufe wird als Zulauf der folgenden Stufe zum Ansaugen des Gasstromes durch Injektoren benutzt. Der Schaum aller Stufen wird gesammelt und kann dann zur Rückführung von Fasern in einer Sekundärstufe nochmals flotiert werden. Derartige Verfahren haben den Nachteil, daß sie bezüglich Produktionsschwankungen anfällig sind, keine Anpassungsmöglichkeit des Luftgehalts an den Anwendungsfall vorhanden ist und ein großer messtechnischer und apparativer Aufwand für den Betrieb der Sekundärflotation erforderlich ist. Ein weiteres Verfahren zur Flotation ist aus der EP 0 035 243 A2 bekannt, wobei hier Abwasser von Feststoffen gereinigt wird. Bei der Reinigung bzw. Trennung von Feststoff und Feststoff ist dies nicht einsetzbar, da hier zu hohe Faserverluste auftreten würden. Weiters sind Regelungsverfahren für Flotationsanlagen aus der EP 0 391 042 A1 bekannt. Es kann aber nur eine Regelung der gesamten Anlage erfolgen und nicht der einzelnen Stufen.

Der Erfindung liegt daher die Aufgabe zugrunde, ein mehrstufiges, energetisch effizientes Verfahren zur Flotation von Faserstoffsuspension zu gestalten, das unempfindlich gegen Produktionsschwankungen und leicht an verschiedene Anwendungsfälle, wie unterschiedliche Rohstoffzusammensetzungen, anpassbar ist.

Die Erfindung ist daher dadurch gekennzeichnet, daß mindestens eine Sekundärstufe vorgesehen ist, die mit dem Überlauf der Primärstufen betrieben wird und deren Gutstoff der ersten Primärstufe zugeführt wird, wobei in jeder Stufe ein eigener, getrennter Flüssigkeitskreislauf vorgesehen ist, der das Gas bzw. die Luft ansaugt und vermischt. Durch die Entkoppelung von Zulauf- und Injektortreibstrahl, der zum Ansaugen des Gases dient, wird ein zusätzlicher Freiheitsgrad gebildet, der die Einstellung des Luftgehaltes unabhängig vom Zulauf ermöglicht. Dadurch kann die Anlage sehr einfach an veränderte Zulaufvolumenströme angepaßt werden und es können bei der Flotation von Faserstoffsuspensionen geringe Faserverluste realisiert werden, wobei die Sekundärzellen in derselben Weise wie Primärzellen ausgeführt sein können.

Eine vorteilhafte Weiterbildung der Erfindung ist dadurch gekennzeichnet, daß der Luftgehalt unabhängig vom Zulaufstrom geregelt wird. Durch diese Regelung wird der Luftgehalt in einfacher Weise an veränderte Zulaufbedingungen angepaßt.

Eine günstige Ausgestaltung der Erfindung ist dadurch gekennzeichnet, daß die zugeführte Luftmenge in Abhängigkeit der Eigenschaften der Faserstoffsuspension eingestellt wird. Dadurch kann für jeden Anwendungsfall ein optimaler Flotationserfolg erzielt werden.

Eine günstige Weiterbildung der Erfindung ist dadurch gekennzeichnet, daß die einzelnen Stufen mit unterschiedlichen Luftmengen beaufschlagt werden. Damit können auch besondere Rohstoffe effizient flotiert werden, ohne den Rohstoffzulauf und damit den Durchsatz zu beeinflussen.

Eine vorteilhafte Ausgestaltung der Erfindung ist dadurch gekennzeichnet, daß die Suspension im unteren Bereich der Zelle/Stufe der nächsten Zelle/Stufe zugeführt wird. Durch Zuführung der Suspension im unteren Bereich der Zelle/Stufe wird verhindert, daß im Schaum gebundene Störstoffe mit in den Gutstoff ausgetragen werden.

Die Erfindung betrifft auch eine Vorrichtung zur Belüftung von Dispersionen, insbesondere Flotationseinrichtung, beispielsweise zum Deinken von Faserstoffsuspension, mit mindestens zwei Flotationszellen, die dadurch gekennzeichnet ist, dass mindestens eine Sekundärflotationszelle, die mit dem Überlauf der Primärzellen betrieben wird und deren Gutstoff der ersten Primärzelle zugeführt wird, vorgesehen ist und mit dem Sammelbehälter in Verbindung steht, wobei in jeder Stufe ein eigener Injektor vorgesehen ist, der mit einer zugeordneten Pumpe zu einem Flüssigkeitskreislauf verbunden ist. Dadurch lässt sich in günstiger Weise eine Entkoppelung von Zulauf- und Injektortreibstrahl erreichen, wodurch ein zusätzlicher Freiheitsgrad gebildet wird und durch den Einsatz einer Sekundärflotationszelle, die der Primärflotation vorangesetzt ist, können die Faserveriuste noch weiter verringert werden.

Eine günstige Weiterbildung der Erfindung ist dadurch gekennzeichnet, daß in den Trennwänden der Zellen im Bereich des Bodens Öffnungen vorgesehen sind. Dadurch kann die Dispersion jeweils in die nächste Zelle fließen, wobei verhindert wird, das Schaum mitgerissen wird.

Eine vorteilhafte Gestaltung der Erfindung ist dadurch gekennzeichnet, daß in jeder Zelle Überlaufrinnen vorgesehen sind, die über eine Sammelleitung mit einem Sammelbehälter verbunden sind. Damit kann der Schaum aus allen Primärzellen gesammelt und gemeinsam entweder abgeführt oder weiterbehandelt werden.

Eine günstige Weiterbildung der Erfindung ist dadurch gekennzeichnet, daß mindestens zwei Zellen in einem Turm angeordnet sind. Eine derartige Anordnung ermöglicht eine noch bessere Trennung der Störstoffe vom Gutstoff.

Eine vorteilhafte Weiterbildung der Erfindung ist dadurch gekennzeichnet, daß mindestens drei Zellen als kreisförmige Flotationsanlage zusammengefaßt sind. Durch diese Anordnung kann bei geringsten Platzbedarf eine gute Abtrennung der Störstoffe erreicht werden.

Eine günstige Weiterbildung der Erfindung ist dadurch gekennzeichnet, daß mehrere Injektoren in jeder Zelle vorgesehen sind. Durch die Anbringung mehrerer Injektoren, insbesondere an unterschiedlichen Stellen einer Zelle, läßt sich einerseits der Durchsatz erhöhen und andererseits eine bessere Verteilung der Suspension und auch der Flüssigkeitsblasen erreichen.

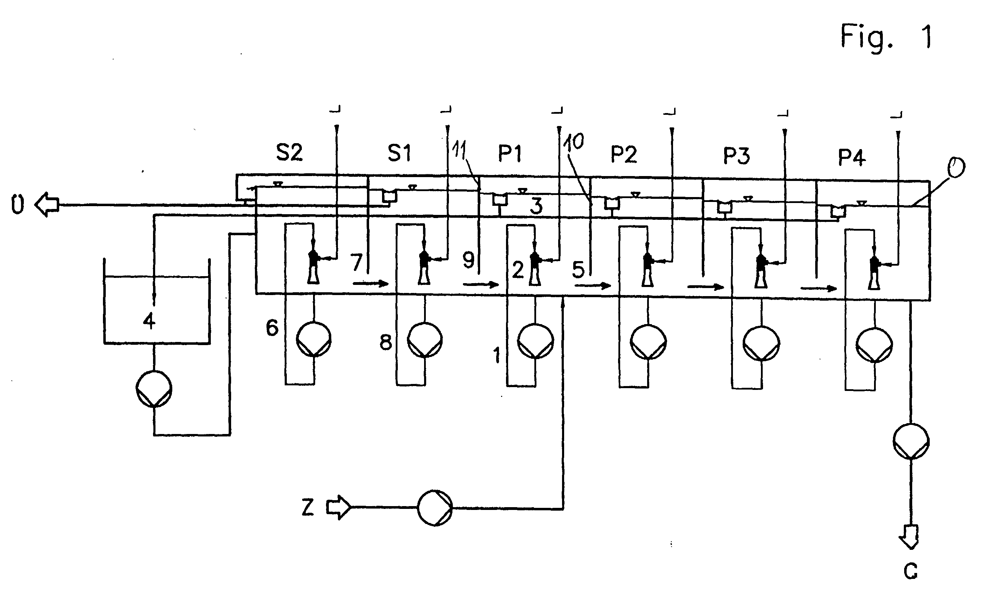

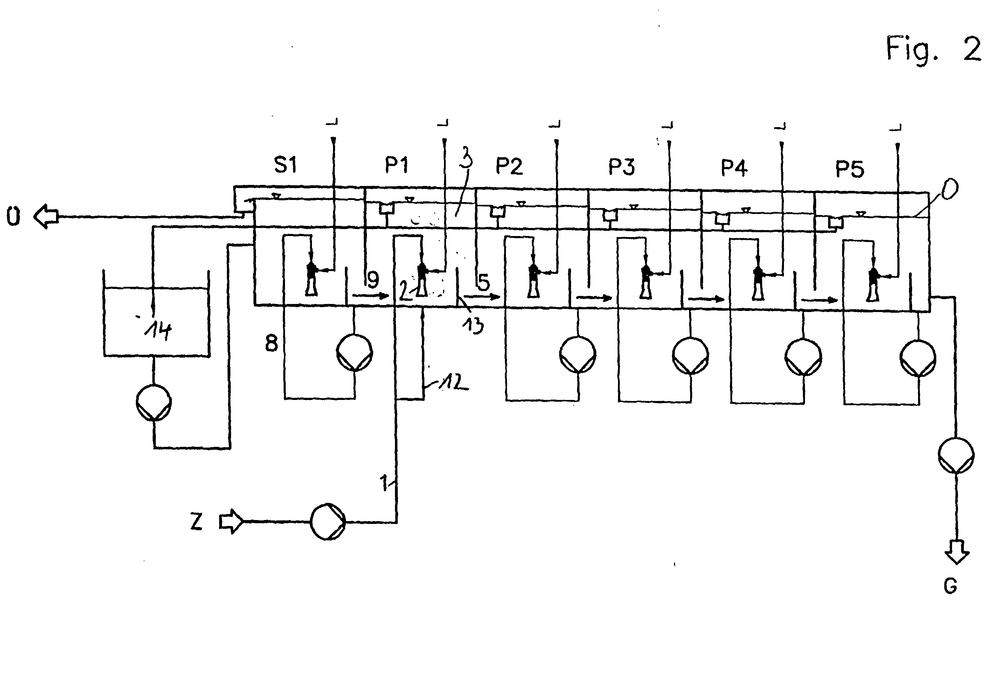

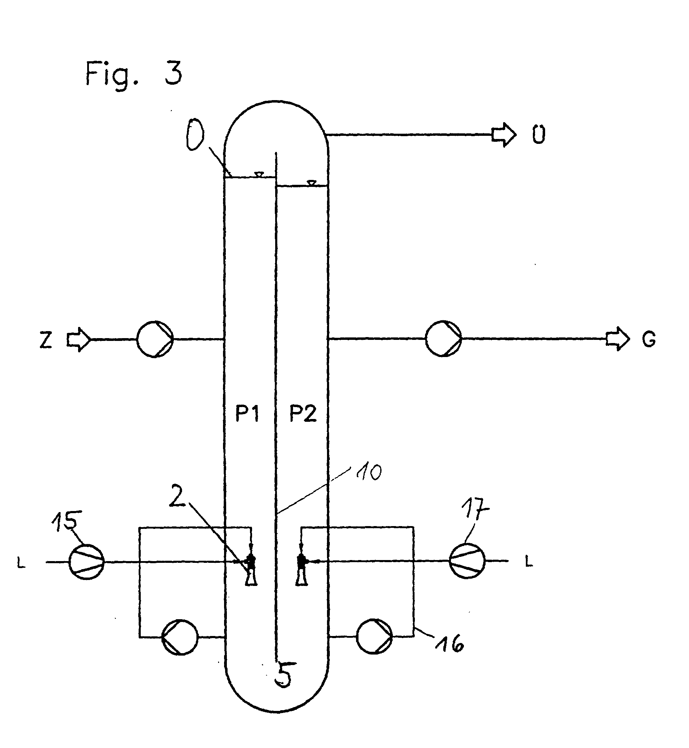

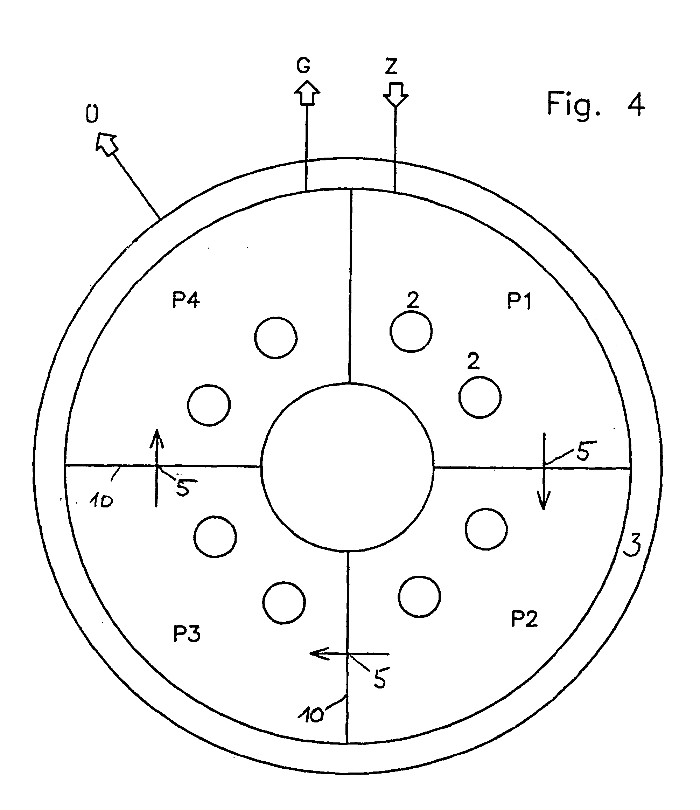

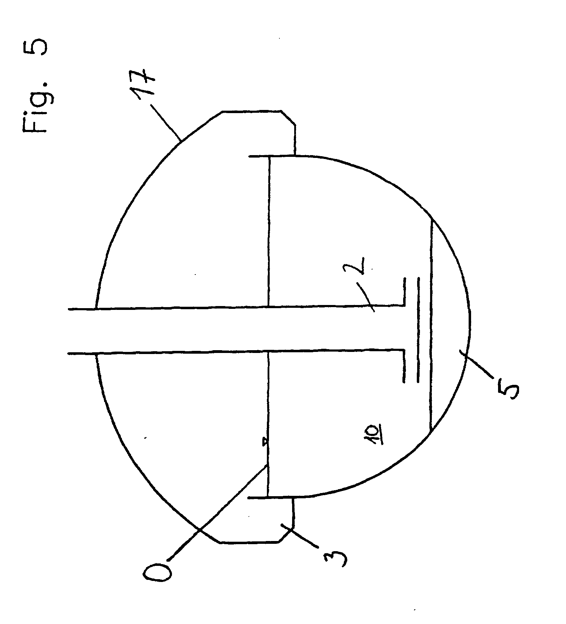

Die Erfindung wird nun im folgenden an Hand der Zeichnungen beispielhaft erläutert, wobei Fig. 1 eine schematische Darstellung des Verfahrens, Fig. 2 eine weitere Variante des erfindungsgemäßen Verfahrens, Fig. 3 eine Ausführungsform einer Flotationszelle gemäß der Erfindung, Fig. 4 eine Ausführung einer weiteren Variante der Erfindung und Fig. 5 einen möglichen Querschnitt einer Anlage gemäß Fig. 1 darstellt.

In Fig. 1 ist eine Flotationsanlage mit vier Primärzellen P1, P2, P3, P4 und zwei Sekundärzellen S1, S2, schematisch dargestellt. Der Zulauf der Faserstoffsuspension Z wird an geeigneter Stelle in die erste Primärzelle P1 eingebracht. Die Blasen werden über den vom Zulauf entkoppelten Kreislauf 1 innerhalb dieser Zelle mit dem Injektor 2 durch Ansaugung von Luft L und Vermischen mit der Suspension erzeugt. Die gesamte Flotationsanlage ist zum überwiegenden Teil mit Suspension gefüllt, an deren Oberfläche O sich ein Schaum bildet, der einen möglichst großen Teil der auszuflotierenden Stoffe und Druckfarbenpartikel enthält. Der von Druckfarben und Störstoffen in der ersten Primärzelle P1 gereinigte Gutstoff tritt durch eine am Boden angeordnete Öffnung 5 in der Trennwand 10 zur zweiten Primärzelle P2 über. Dort und in allen weiteren Primärzellen wird die Suspension in gleicher Weise, mit Blasenerzeugungsinjektoren, die durch zelleninterne Kreisläufe betrieben werden, behandelt und tritt am Ende der Anlage als Gutstoff G aus. Der gesammelte Schaum aller Primärzellen P1 bis P4 kann über eine Schaumrinne 3 in einen Behälter 4 abfliessen. Aus diesem Zwischenbehälter 4 wird der inzwischen weitgehend entschäumte Überlauf in die Sekundärzelle S2 eingebracht. Die Begasung erfolgt dort wieder um den zelleninternen Kreislauf 6. Der Übertritt des Gutstoffes der Sekundärzelle S2 in die Sekundärzelle S1 erfolgt durch die am Boden angeordnete Öffnung 7. Nach der Begasung mittels Kreislaufs 8 kann der Schaum der Sekundärzellen als Überlauf Ü abgeführt werden. Der Gutstoff der Sekundärzelle S1 gelangt durch die am Boden angeordnete Öffnung 9 in der Trennwand 11 in die erste Primärzelle P1.

In Fig. 2 wird nur eine Sekundärzelle S1 verwendet und der Zulauf Z zum Teil als Treibstrahl für den Injektor 3 verwendet. Der restliche Teilstrahl des Zulaufs Z tritt an geeigenter Stelle in die erste Primärzelle P1 ein. Der Gutstoff der einzelnen Zellen gelangt über Öffnungen 5 der Trennwände 10 in die jeweilige nächste Primärzelle P2, P3, P4, P5 und kann dann als Gutstoff G ausgetragen werden. Um das Ansaugen von Luft L mit den zelleninternen Injektorkreislauf zu vermeiden, wird eine Schutzvorrichtung 13 in jeder Zelle verwendet und erst dahinter die Suspension für den Injektortreibstrahl abgeführt. Der gesammelte Schaum der Primärzellen P1 bis P5 gelangt über eine Schaumrinne 3 in einen Zwischenbehälter 4, von dem aus der entschäumte Überlauf in die Sekundärzelle S1 eingebracht wird. Die Blasenerzeugung erfolgt über den Kreislauf 8 mit einem Injektor. Der Gutstoff der Sekundärzelle S1 fließt durch die Öffnung 9 in die Primärzelle P1, der Schaum der Sekundärzelle S1 wird als Überlauf Ü abgeführt.

Fig. 3 zeigt eine Anordnung von zwei Primärzellen P1 und P2 in einem Turm, um teilweise das Gegenstromprinzip zu nutzen und auch durch die Höhe der Flüssigkeit eine bessere Trennwirkung zu erzielen. Der Zulauf Z wird über den Injektor, bei dem die Luft bei zu hohem Suspensionsstand mit einem Verdichter 15 eingebracht wird, der Primärzelle P1 zugeführt. Der Übertritt des Gutstoffes in die zweite Prämärzelle P2 erfolgt durch die Öffnung 5 in der Trennwand 10 zwischen den beiden Zellen. Die Blasen in der zweiten Primärzelle P2 werden mit dem Suspensionskreislauf 16 unter Einsatz des Verdichters 17 erzeugt. Der Gutstoff G und der gesammelte Überlauf Ü (Schaum) können abgeführt werden.

In Fig. 4 ist eine Ausführung der Erfindung mit vier Primärzellen als kreisförmige Flotationsanlage abgebildet. Die Druckfarben und Störstoffe des Zulaufes Z werden mit Blasen aus den Begasungseinrichtungen (Injektoren 2) in der ersten Primärzelle P1 flotiert. Der Gutstoff tritt durch Öffnungen 5 an der Unterseite der Trennwände 10 in die jeweils nächste Primärzelle P2, P3 bzw. P4 über und kann nach viermaliger Flotation aus der vierten Primärzelle P4 als Gutstoff G abgeführt werden. Der Überlauf aller Zellen wird in der Schaumrinne 3 gesammelt und als Überlauf Ü ausgetragen.

Fig. 5 zeigt einen möglichen Querschnitt einer Flotationsanlage nach Fig. 1 bzw. 2. Die wannenförmige Flotationszelle mit der Abdeckung 17 ist zum größten Teil mit Suspension gefüllt. Die Blasen werden über die Belüftungseinrichtung (Injektor) 2 erzeugt und befördern die Druckfarben bzw. Störstoffe an die Flüssigkeitsoberfläche O, wo sie als Schaum über die Schaumrinne 3 abfliessen können. Der Gutstoff dieser Zelle gelangt durch die Öffnung 5 in der Trennwand 10 in die nächste Zelle und wird dort wieder mit Gasblasen in Kontakt gebracht.

## Patentansprüche

1. Verfahren zur Belüftung von Dispersionen zur Flotation beim Deinken von Faserstoffsuspensionen, bei dem mindestens zwei Stufen vorgesehen sind, **dadurch gekennzeichnet, dass** mindestens eine Sekundärstufe vorgesehen ist, die mit dem Überlauf der Primärstufen betrieben wird und deren Gutstoff der ersten Primärstufe zugeführt wird, wobei in jeder Stufe ein eigener, getrennter Flüssigkeitskreislauf vorgesehen ist, der das Gas bzw. die Luft ansaugt und vermischt.

2. Verfahren nach Anspruch 1, **dadurch gekennzeichnet, dass** der Gas- bzw. Luftgehalt unabhängig vom Zulaufstrom geregelt wird.

3. Verfahren nach Anspruch 1 oder 2, **dadurch gekennzeichnet, dass** die zugeführte Gas- bzw. Luftmenge in Abhängigkeit der Eigenschaften der Faserstoffsuspension eingestellt wird.

4. Verfahren nach einem der Ansprüche 1 bis 3, **dadurch gekennzeichnet, dass** die einzelnen Stufen mit unterschiedlichen Gas- bzw. Luftmengen beaufschlagt werden.

5. Verfahren nach einem der Ansprüche 1 bis 4, **dadurch gekennzeichnet, dass** die Suspension im unteren Bereich der Zelle/Stufe der nächsten Zelle/Stufe zugeführt wird.

6. Vorrichtung zur Belüftung von Dispersionen zum Deinken von Faserstoffsuspensionen, mit mindestens zwei Flotationszellen, **dadurch gekennzeichnet, dass** mindestens eine Sekundärflotationszelle (S1, S2) , die mit dem Überlauf der Primärzellen (P1, P2, P3, P4, P5) betrieben wird und deren Gutstoff der ersten Primärzelle (P1) zugeführt wird, vorgesehen ist und mit dem Sammelbehälter (4) in Verbindung steht, wobei in jeder Stufe (P1, P2, P3, P4, P5) ein eigener Injektor (2) vorgesehen ist, der mit einer zugeordneten Pumpe zu einem Flüssigkeitskreislauf (1) verbunden ist.

7. Vorrichtung nach Anspruch 6, **dadurch gekennzeichnet, dass** in den Trennwänden (10) der Zellen (P1, P2, P3, P4) im Bereich des Bodens Öffnungen (5) vorgesehen sind.

8. Vorrichtung nach einem der Ansprüche 6 oder 7, **dadurch gekennzeichnet, dass** in jeder Zelle Überlaufrinnen vorgesehen sind, die über eine Sammelleitung (3) mit einem Sammelbehälter (4) verbunden sind.

9. Vorrichtung nach Anspruch 6 oder 7, **dadurch gekennzeichnet, dass** mindestens zwei Zellen (P1, P2) in einem Turm angeordnet sind.

10. Vorrichtung nach einem der Ansprüche 6 bis 8, **dadurch gekennzeichnet, dass** mindestens drei Zellen (P1, P2, P3, P4) als kreisförmige Flotationsanlage zusammengefasst sind.

11. Vorrichtung nach Anspruch 10, **dadurch gekennzeichnet, dass** mehrere Injektoren (2) in jeder Zelle (P1, P2, P3, P4) vorgesehen sind.

## Claims

1. Process for aerating dispersions for the flotation of pulp suspensions in the deinking process, in which at least two stages are provided, **characterised by** at least one secondary stage being provided that is operated with the overflow from the primary stages and by its accept being fed to the first primary stage, and by each stage having a separate liquid circulating system which sucks in the gas or air and mixes it with the liquid.

2. Process according to Claim 1, **characterised by** the gas or air content being controlled independently of the feed rate.

3. Process according to Claim 1 or 2, **characterised by** the gas or air feed rate being set according to the properties of the pulp suspension.

4. Process according to one of Claims 1 to 3, **characterised by** different quantities of gas or air being applied in the individual stages.

5. Process according to one of Claims 1 to 4, **characterised by** the suspension being fed to the next cell/stage in the lower section of the cell/stage.

6. Device for aerating dispersions for deinking pulp suspensions, with at least two flotation cells, **characterised by** at least one secondary flotation cell (S1, S2) being provided, which is operated with the overflow from the primary cells (P1, P2, P3, P4, P5) and whose accept is fed to the first primary stage (P1) and which is connected with the collecting tank (4), where a separate injector (2) is provided in each stage (P1, P2, P3, P4, P5) which is joined up with an assigned pump to form a liquid circulating system (1).

7. Device according to Claim 6, **characterised by** openings (5) being provided in the dividing walls (10) of cells (P1, P2, P3, P4) at floor level.

8. Device according to one of Claims 6 or 7, **characterised by** overflow channels being provided in each cell, which are connected to a collecting tank (4) via a collecting main (3).

9. Device according to Claim 6 or 7, **characterised by** at least two cells (P1, P2) being arranged in a tower.

10. Device according to one of Claims 6 to 8, **characterised by** at least three cells (P1, P2, P3, P4) being combined to form a circular flotation plant.

11. Device according to Claim 10, **characterised by** several injectors (2) being provided in each cell (P1, P2, P3, P4).

## Revendications

1. Procédé d'aération des dispersions pour la flottation des suspension de pâte dans un procédé de désencrage, où au moins deux étapes sont prévues, **caractérisé en ce qu'** au moins une étape secondaire est prévue qui s'opère avec le trop-plein des étapes primaires, ses acceptées se trouvant alimentées à la première étape primaire, et que chacune des étapes a un système de circulation de liquide individuel qui aspire le gaz ou l'air et le mélange avec le liquide.

2. Procédé selon la revendication 1, **caractérisé en ce que** le contenu de gaz ou d'air est contrôlé indépendamment du débit d'alimentation.

3. Procédé selon la revendication 1 ou 2, **caractérisé en ce que** le débit du gaz ou de l'air est réglé selon les caractéristiques de la suspension de pâte.

4. Procédé selon l'une des revendications 1 à 3, **caractérisé en ce que** des quantités différentes de gaz ou d'air sont utilisées dans les étapes individuelles.

5. Procédé selon l'une des revendications 1 à 4, **caractérisé en ce que** la suspension est alimentée à la cellule/étape suivante dans la section inférieure de la cellule/étape.

6. Dispositif d'aération des dispersions pour procédés de désencrage de pâte, avec au moins deux cellules de flottation, **caractérisé en ce qu'** au moins une étape secondaire (S1, S2) est prévue qui s'opère avec le trop-plein des cellules primaires (P1, P2, P3, P4, P5), ses acceptées se trouvant alimentées à la première étape primaire (P1), et qui est connectée au bac collecteur (4), avec un injecteur séparé étant prévu dans chacune des étapes (P1, P2, P3, P4, P5) et relié à une pompe assignée pour obtenir un système de circulation de liquide (1 ).

7. Dispositif selon la revendication 6, **caractérisé en ce que** des ouvertures (5) sont prévues dans les cloisons (10) des cellules (P1, P2, P3, P4) au fond.

8. Dispositif selon l'une des revendications 6 ou 7, **caractérisé en ce que** des canaux de trop-plein sont pourvus dans chaque cellule, qui sont connectés à un bac collecteur (4) par une conduite collectrice (3).

9. Dispositif selon la revendication 6 ou 7, **caractérisé en ce qu'**au moins deux cellules (P1, P2) sont disposées dans une tour.

10. Dispositif selon l'une des revendications 6 à 8, **caractérisé en ce qu'**au moins trois cellules (P1, P2, P3, P4) sont combinées pour former une flottation circulaire.

11. Dispositif selon la revendication 10, **caractérisé en ce que** plusieurs injecteurs (2) sont prévus dans chaque cellule (P1, P2, P3, P4).
